# EUROPEAN PATENT SPECIFICATION

(11) **EP 0 482 110 B1**
(45) Date of publication and mention of the grant of the patent: **14.12.1994**
(21) Application number: 90912734.2
(22) Date of filing: 11.07.1990
(51) Int. Cl.: G02B 6/38

(54) **METHOD AND APPARATUS FOR TERMINATING A FIBER-OPTIC CABLE WITHOUT ADHESIVE**
VERFAHREN UND VORRICHTUNG ZUM ABSCHLUSS EINES FASEROPTISCHEN KABELS OHNE KLEBEMITTEL
PROCEDE ET APPAREIL DE TERMINAISON D'UN CABLE A FIBRE OPTIQUE SANS ADHESIF

(30) Priority: 12.07.1989 US 378930; 22.01.1990 US 467915
(43) Date of publication of application: 29.04.1992
(73) Proprietor: THE WHITAKER CORPORATION, Wilmington, Delaware 19808 (US)
(72) Inventor: GRINDERSLEV, Soren, Shelton, CT 06484 (US)
(74) Representative: Blumbach, Kramer & Partner
(86) International application number: US9003964
(87) International publication number: WO9101013

(56) References cited:
- EP-A- 0 210 921
- FR-A- 2 629 925
- ALTA FREQUENZA, volume L, no. 4, July-August 1981 ; M. BRENCI et al. : "Optical fiber connector in a delivery system for medical application", pages 223-225.
- PATENT ABSTRACTS OF JAPAN, volume 8, no. 109 (P-275)(1546), 22 May 1984 ; & JP-A-5918915

## Description

### Background of the Invention

This invention relates to an apparatus and method for terminating, including joining and splicing, light transmitting signal cables having at least one optical fiber. It relates in particular to an apparatus and method that secure a fiber optic cable by mechanical means, and without the need for an adhesive.

Fiber optic communication cables typically include at least one light transmitting optical fiber clad in an optically insulating material. The cladding protects the glass fiber, and prevents dispersion of light out of the optical fiber. The fiber optic cable usually has a protective external buffer, typically of a plastic material, which may or may not be removed to terminate the cable.

The use of fiber optic systems creates a need for a connector capable of coupling segments of light-conductive cable with minimal detriment to light transmission. To achieve efficient light transfer between fiber optic cables, the optical fibers must be axially and angularly aligned to high precision, as well as spaced close together with or without touching, whichever is specified. The alignment and spacing requirements are exceedingly demanding, due to the minute, micron-size diameter of the optical fibers being connected, coupled or otherwise terminated.

Both mechanical and adhesive clamp systems have been employed to achieve the requisite fiber alignment. Prior mechanical clamps may subject the optical fiber to excessive clamping or gripping pressures causing breakage or damage and, thus, reduced light transmission. Insufficient gripping pressure, on the other hand, permits undesirable movement of the optical fiber. These problems are particularly likely to occur in environments where significant temperature variations cause expansion and contraction, which result in clamping pressure variations.

Prior terminations employing adhesives, like prior mechanical terminations, can provide accurate positioning of the fiber and polishing of its end without displacement. However, one disadvantage of adhesive clamps is that they require the correct application, and subsequent curing, of the adhesive.

An apparatus according to the prior art portion of claim 1 is disclosed in document EP-A-0 053 914. This prior art uses a resilient split retaining cone portion having a fiber receiving central bore, wherein the retaining cone grips the fiber when it is compressed within a matching conical cavity section of the inner bore of a connector terminal by a washer acting on the base of the cone when the connector parts are assembled together.

Similar constructions are known from the documents WO-A-86/01610 and an article in "Alta Frequenza", Volume L, No. 4, July/August 1981, by M. Brenci et al, entitled "Optical fiber connector in a delivery system for medical application". In each of these documents a threaded, two-portion connector is described between which a deformable member is compressed against an optical fiber. Like the prior art of the above mentioned EP-A-0 053 914, the deformable member has a conical shape complementary to a conical cavity section in one of the connector parts.

It is accordingly an object of this invention to provide an improved method and apparatus for terminating a fiber optic cable by mechanical action, without the need for an adhesive.

It is another object of the invention to provide a method and apparatus for terminating a fiber optic cable with mechanical action and with minimal risk of subjecting the cable to damaging or destructive forces.

It is also an object of the invention to provide a method and apparatus for terminating a fiber optic cable that is uniformly effective under a variety of environmental conditions.

Further objects of the invention include providing a fiber optic cable connector of the above character that is economical to manufacture, easy to use, and that provides reliable high level optical signal transmission.

These objects are achieved with an apparatus and a method, respectively, as claimed.

Other general and specific objects of the invention will in part be obvious and will in part appear hereinafter.

### Summary of the Invention

The invention attains the foregoing objectives with a connector apparatus that includes a terminating element, an actuating element, and a compressive system. The apparatus and method of the invention align and terminate an optical fiber such that the secured fiber is concentrically disposed with respect to the outer dimension of the terminating element.

The terminating element is typically a connector outer housing or shell and has a central passage through which a fiber optic cable extends. The actuating element is tubular to fit over the cable and to fit telescopically within a section of the housing passage. The compressive system is a set of one or more resilient elements seated within the housing passage circumferentially about a buffered or unbuffered fiber. Upon assembling the actuating element fully with the terminating element, the compressive system is pressed by the two interfitting elements radially inward to secure the optical fiber in place. The terminating element provides precise centering and alignment of the secured fiber.

More particularly, the terminating element is a hollow body that has an axially extending tubular passage. A shoulder or other radial constriction is closely rearward of a first, forward section of the passage. A second passage section is axially behind the first passage section. The cable length within the second passage section, and correspondingly within the actuating element, typically has the buffer intact. The fiber length within the first passage section is unbuffered in one embodiment, and can, in another embodiment, be buffered. The terminating element preferably has at least one deflectively acting surface for deflecting the compressive system radially inward during assembly.

The actuating element is a tubular member that telescopically seats over the cable being terminated and that assembles within the passage of the terminating element. It is arranged for engagement with the compressive system to press it into mechanical engagement with the optical fiber. In one embodiment, a compressively acting surface on a first forward end of the actuating element abuts the compressive system for deforming it radially inward. The actuating element hence has a tubular passage concentric with the tubular outer surface of the actuating element and adapted to receive the optical fiber, typically with the buffer layer intact. The actuating element can include a lock element for fixing it in an axial, fully assembled position relative to the terminating element. An optional yet preferred feature of the invention provides a second mechanical engagement onto the buffered cable at the back of the actuating element. This second clamp can employ finger-like clamp members on the axial back end of the actuating element and which are pressed onto the buffered cable by sliding interference with the terminating element.

The compressive system of the illustrated embodiment is disposed within the passage of the terminating element, and arranged circumferentially about the optical fiber, whether buffered or unbuffered. When radially inwardly deformed, the compressive system compressively engages the optical fiber. The compressive system preferably is closely adjacent to the first, forward section of the terminating element and is axially forward of the actuating element. The compressive system can be a single centrally apertured deformable element. Other embodiments can employ a set of two or more compressive elements. In one embodiment, each compressive element is an elastically deformable, resilient material, preferably with a circular cross-section, and the set of one or more of such elements substantially encircles the optical fiber. In operation, the set of compressive elements is radially inwardly compressed, by the terminating element and the actuating element, into mechanical engagement with the buffered or unbuffered optical fiber closely adjacent its entry into the forward passage section. It is understood that the compressive system preferably provides this engagement with a linear relation between the compressive force it receives and the resultant deformation of the system, and without regard to whether the system undergoes a compressive reduction in volume.

According to the method of the invention, a fiber optic cable is seated in the passage of the terminating element. A portion of the fiber, either buffered or unbuffered, extends through the compressive system and through the first forward section of the passage of the terminating element. The compressive system is compressively formed in a radial inward direction by forces created by the axial telescopic assembly of the actuating element with the terminating element. The actuation of the compressive system compresses it into supporting and retaining engagement with the optical fiber. Preferably, the compressive system is maintained in its clamping condition.

The exposed, connecting end of an optical fiber that is secured in a termination in accordance with the invention can be polished in the same manner as conventional in the art for terminations utilizing epoxy and other adhesives.

The foregoing features of the invention, and others described below, provide a fiber optic cable termination that does not require adhesive and yet terminates a fiber optic cable readily and with high reliability. The invention can be practiced economically and hence cost competitively with existing practices and structures, and can provide high quality communication and mechanical performance at least comparable with existing terminations that employ epoxy or other adhesives.

Although the invention thus provides a fiber optic termination that is secure, precise and reliable solely by mechanical action, and applied at room temperature without requiring adhesive, features of the apparatus and of the method of the invention may be used to advantage together with adhesives, and the invention has corresponding scope.

### Detailed Description of the Drawings

For a fuller understanding of the nature and objects of the invention, reference should be made to the following detailed description and the accompanying drawings, in which:
FIGURE 1 is a cross-sectional side view of an optical fiber termination according to the invention in unassembled form;
FIGURE 2 is a view similar to FIGURE 1, with the actuating element partially assembled within the terminating element sufficiently to initially deform the compressive system;
FIGURE 3 is a side view similar to FIGURES 1 and 2 of the termination fully assembled;
FIGURE 4 is a transverse cross-sectional view along line 4-4 of FIGURE 1;
FIGURE 5 is a transverse cross-sectional view along line 5-5 of FIGURE 3;
FIGURES 6, 7 and 8 are perspective views of three different compressive systems in accordance with the invention;
FIGURE 9 is a side view, partially cut away, of another fiber optic cable termination according to the invention and in fully assembled form;
FIGURE 10 is a side view, partially cut away, of another fiber optic cable termination, in partially assembled form, according to the invention;
FIGURE 11 is a side view, partially cut away, of a fiber optic cable coupling, including the termination of the present invention, in partially assembled form, including a spring-acting locking element, and
FIGURE 12 is a view similar to FIGURE 1 showing another embodiment of the invention.

### Description of the Illustrated Embodiments

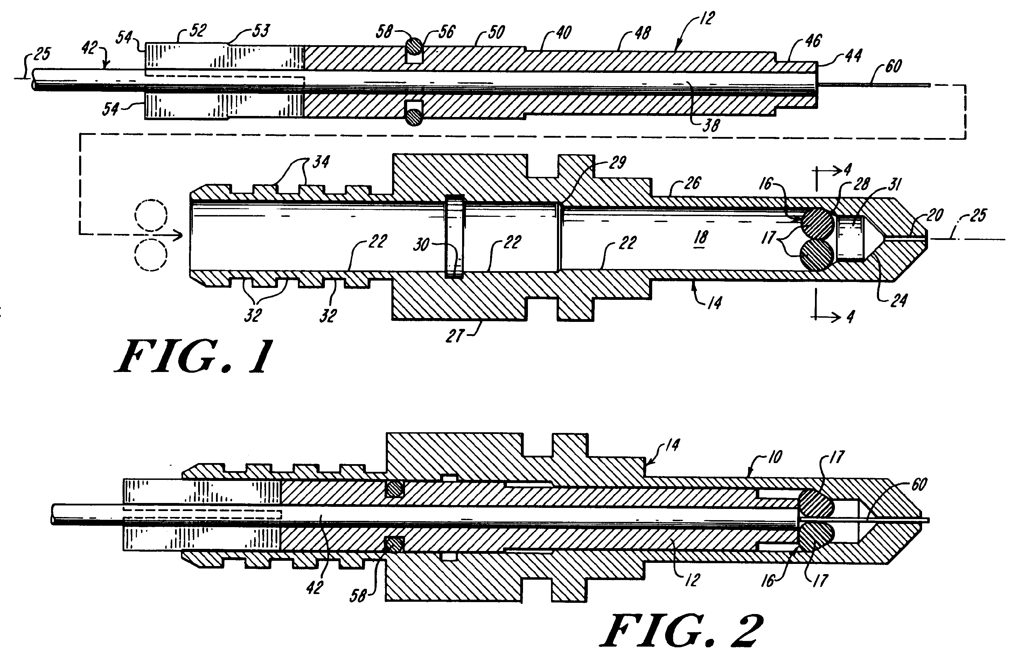

A fiber optic termination 10 according to the invention, shown in FIGURES 1 through 3, has an outer, terminating element 14, an inner, actuating element 12, and a compressive system 16 illustrated as having a set of three compressive elements 17.

The illustrated outer element 14 is a tubular housing body that has an axial through passage 18 concentric about an axis 25 with a forward outer surface 26. The tubular passage 18 has a first section 20, illustrated as dimensioned for receiving and for supporting and positioning an unbuffered optical fiber 60. The first passage section is axially forward of a second passage section 22. This rear passage section 22 is dimensioned to telescopically receive and seat the inner element 12. A radial constriction forms a shoulder or abutment 24 at the back, rear end of the forward passage section 20 and forward of the passage section 22. The illustrated radial constriction is a right circular cone concentric with the axis 25 of the passage 18. The outer surface of the terminating element body is illustrated as having an axial succession of lands 34 and grooves 32 at the axial back end to receive and engage a cable-supporting sheath or sleeve, as conventional. The forward outer surface 26 is structured as a cylindrical plug to seat telescopically in conventional fashion in a mating receptacle termination (not shown), and the central portion 27 of the outer surface is structured to provide conventional mechanical connection with such a receptacle.

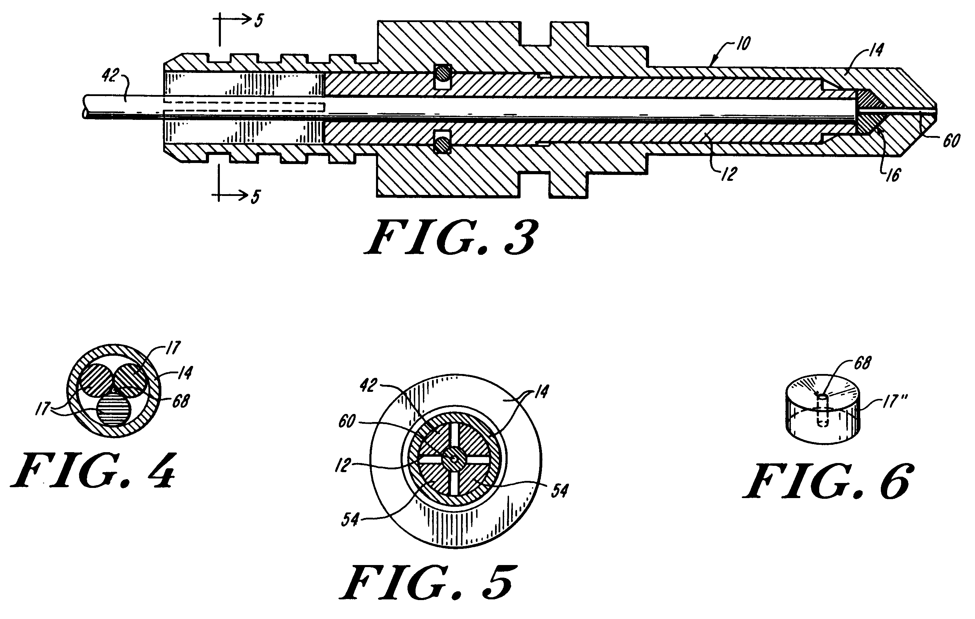

The illustrated second passage section 22 has, spaced apart in axial succession, a conical deflecting guide surface 28, an outward step 29, and an optional locking groove 30, all rearward of the radial constriction element 24. The illustrated passage 18 also has a short bore 31 between the elements 24 and 28. The guide surface 28 forms a funnel, preferably with a cone angle in the order of 60°, and having a forward diameter less than the composite diameter of compressive system 16 prior to being compressed. The locking groove 30 is positioned to receive and seat a locking ring 58 carried on the inner element 12, when the termination 10 is completely assembled, as in FIGURE 3.

With further reference to FIGURES 1, 2 and 3, the illustrated inner, actuating element 12 has a tubular axial through passage 38 concentrically within a outer surface 40, and has a compressively acting axially forward surface 44. The passage 38 is adapted to receive and support a buffered optical fiber cable 42. The illustrated tubular outer surface 40 has a front section 46 that matingly fits within the terminating element bore 31, a larger middle section 48 that matingly fits within the passage 22 forward of the step 29 and rearward of the guide surface 28, and a still larger back section 50 that matingly fits with the passage 22 behind the step 29. Preferably, the radial steps between the sections 46 and 48, and further between the sections 48 and 50, are located in the fully assembled termination, FIGURE 3, in close axial proximity rearward of the guide surface 28 and of the step 29, respectively, of the outer element 14. The illustrated outer surface 40 can also include a locking ring groove 56, located rearward of the step between sections 48 and 50, that seats the expandable locking ring 58.

As partially shown in FIGURES 4 and 5, the outer surface sections 46, 48 and 50 of the actuating element; and the sections 20 and 22 and bore 31 of the passage 18, as well as the forward outer surface 26, all are cylindrical, with circular cross sections, and, together with the fiber passage 68, are coaxial with the axis 25.

The illustrated termination 10, which engages a fiber optic cable with the compressive system 16 at the forward end of the termination, i.e. right-most in FIGURE 3, also engages the cable at the rearward end of the termination, i.e. left-most in FIGURE 3. This second engagement is provided by clamping members 54, at the rear end of the inner, actuating element 12. These clamping members are actuated by interferingly engaging the walls of passage 18. The illustrated clamping members 54 are formed with a rearmost section 52 on the inner element 12. Section 52 has an enlarged outer diameter, axially rearward of a step 53, illustrated as between the lock-seating groove 56 and the back end of the inner element. The step 53 preferably is gradual, e.g. tapered. Axial slots through the tubular wall of this largest diameter section 52 of the inner element 12, as shown in the upper portion of FIGURE 1 and in FIGURE 5, form four clamping fingers 54 in the embodiment shown. The enlarged outer diameter of these fingers interferingly fits within the passage 18, to compress the fingers onto the buffered cable as the termination is assembled.

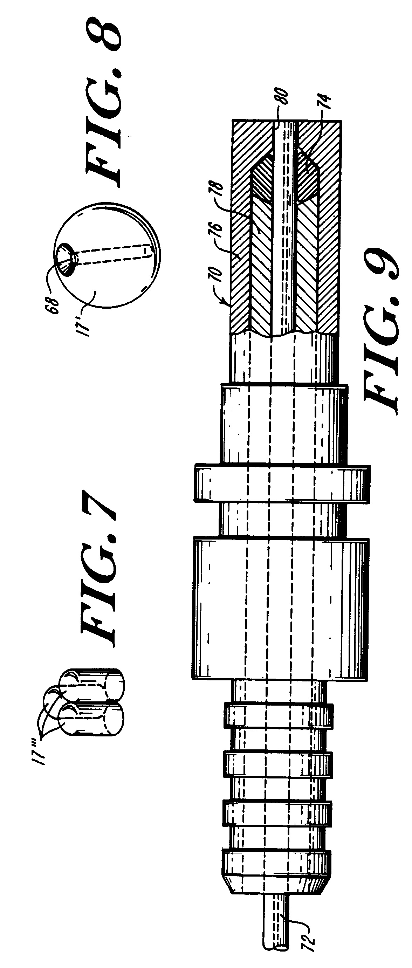

The compressive system 16 of the termination 10 can include a single, centrally apertured deformable element such as the spherical element 17′ of FIGURE 8 or as the disk element 17˝ of FIGURE 6. The further embodiment of FIGURES 1 through 4 employs a set of three spherical elements 17 arranged in a circle to defined a fiber-receiving hole 68 between them. In other embodiments, the compressive system 16 can include three rod-like elements 17‴ as shown in FIGURE 7. To ensure that each compressive element 17 maintains substantially uniform holding pressure on an optical fiber or cable, it is preferably constructed of a homogeneous and resiliently pliable, elastomeric material that retains the memory of its undeformed shape. Examples of such a material include nylon, delrin, polyethylene, polypropylene, rubber, and polyvinyl chloride. The initial shape of the elements 17 may be of various configurations per FIGURES 4, 6, 7 and 8, and, preferably, has a circular cross-section, as shown. The fiber passage 68, passing through or among element(s) 17 receives an unbuffered optical fiber 60, as FIGURE 2 shows. Prior to compression, the fiber passage 68 has a diameter sufficient to allow free movement of the optical fiber. The size and shape of the fiber passage 68 may be altered by varying the number, diameter, and/or shape of the elements 17. Further, the compressive system 16 preferably has a tapered opening to the passage 68 to guide insertion and passage of the optical fiber. A system 16 of three spheres provides such a fiber guide, as shown in FIGURE 1. If a one-piece compressive system 16 as in FIGURES 6 or 8 is used, it is preferred that the ends of the fiber passage 68 therein be flared to guide the optical fiber as also shown.

FIGURES 1 through 3 illustrate, in sequence, the process of the invention with a cable connector having the described structure. As shown in the upper portion of FIGURE 1, a buffered fiber optic cable 42 is seated within the passage 38 of the inner element 12, and the unbuffered and clad optical fiber 60 of the cable extends beyond the compressively acting surface 44 of the inner element 12. The compressive system 16 is assembled with the cable 42, as by sliding it over the fiber 60 prior to assembly with the outer terminating element 14. An alternative step is to place the compressive system 16 within passage 18 of the outer, terminating element 14 at the forward end of the second passage section 22, as shown in the lower portion of FIGURE 1.

The inner element 12 is slidingly telescoped into the outer element 14, as shown in FIGURE 2, with the unbuffered optical fiber 60 passing through the clearance hole 68 and through the forward passage section 20 of outer element 14,to project axially beyond the termination element 14. After the termination elements 12, 14 and 16 are partially assembled and aligned in this manner with each other and with the cable 42, further axial assembly of the inner element 12 with the outer element 14 includes compressing the compressive system 16 between the compressively acting surface 44 of inner element 12 and the guide surface 28 of the outer element 14. The guide surface 28 deflects the axial force exerted by compressively acting face 44, causing the compressive system 16 to deform radially inwardly and into initial mechanical engagement with the optical fiber 60.

Further assembly of the two termination elements presses the compressive system 16 axially into the bore 31, with continued compression radially inward onto the fiber 60. The inner and outer elements 12 and 14 thus function like a piston within a cylinder respectively, and compress the set of elements of the compressive system onto the fiber 60.

Concurrently the greater diameter of inner element 12 rearward of step 53 produces a compressive engagement between the inner element 12 section 52 and the outer element 14, and deflects the fingers 54 concentrically inward onto cable 42.

The inner element 12 telescopes into the outer element 14 until locking grooves 30 and 56 are aligned, at which point the locking ring 58 expands and engages the outer groove 30, as shown in FIGURE 3. At this point, the assembled compressive system 16 mechanically engages the unbuffered optical fiber 60, for supporting and retaining the fiber 60 in a fixed position relative the outer surface of outer element 14. The passage 18 within the forward section 20 supportingly receives with minimal clearance the optical fiber tip that projects forward of the compressive system to align and position it with precision. Further, the compressively acting clamping fingers 54 secure the buffered clad optical cable 42 to the assembled termination elements 12 and 14.

The projecting optical fiber 60 is trimmed and polished, as known in the art, to complete the termination of the cable 42.

As also known in the art, a sleeve (not shown) may be positioned over the buffered optical cable 42, after final assembly of the termination 10, such that a portion extends over the lands 34 and grooves 32 of the outer terminating element 14. The sleeve may then be crimped or otherwise secured in position.

It will now be apparent that the assembly procedure requires only axial telescoping of the elements 12 and 14 together, and requires no threading or rotating of one element relative to the other or relative to the optical fiber. The only force or stress to which the exposed fiber 60 is thus subjected is radial compression by the compressive system 16.

FIGURE 9 shows another termination 70 according to the invention that secures a buffered optical cable 72 in the manner described above with reference to FIGURES 1 through 8, except that the entire length of the fiber is buffered and a compressive system 74 is radially compressed onto the buffered cable, instead of onto an unbuffered fiber as in FIGURES 1 through 8. The termination 70 has an outer termination element 76 that telescopically receives an inner, actuating element 78 to press the compressive system 74 onto the cable. The terminating element 76 accordingly has a forward passage section 80 that supportingly receives and locates the buffered cable. The remaining structure and its function, and the termination method, for this embodiment can be in accord with the preceding description of the termination 10.

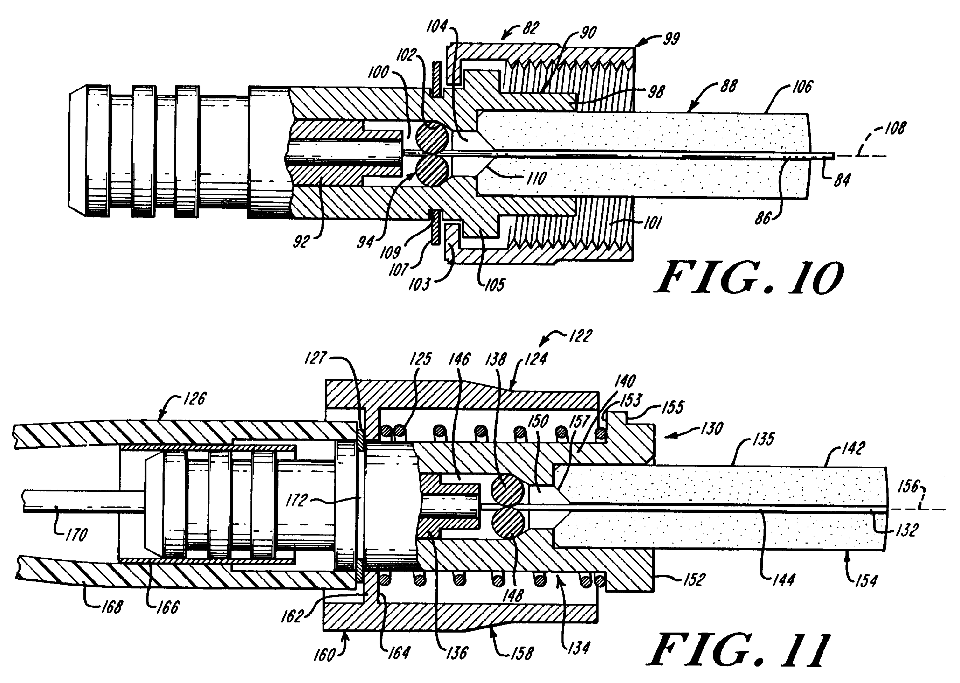

FIGURE 10 shows another termination 82 according to the invention that secures an unbuffered optical fiber 84 in the manner described above with reference to FIGURES 1 through 8, except that a forward passage section 86 is formed using a ferrule 88. The ferrule 88 can be fabricated of a ceramic, stainless steel, or other suitable material familiar to those of ordinary skill in the art. The termination 82 has an outer termination element 90 that telescopically receives an inner, actuating element 92 to press a compressive system 94 onto the fiber 84. Termination element 90 includes a tubular housing body 98 and the ferrule 88. Tubular housing body 98 provides tubular passage 100 having a deflecting guide surface 102 and a forward short bore 104. The forward passage section 86 and outer diameter 106, of ferrule 88, are coaxial with an axis 108 of tubular passage 100. In addition to forward passage section 86, the ferrule 88 provides a radial constriction element 110. The termination element 90 is fabricated by securing the housing body 98 and the ferrule 88 together typically by press fitting, although other techniques including adhesive and molding can be used.

The termination 82 shown in FIGURE 10 also includes a coupling element, illustrated as a freely-rotatable threaded coupling receptacle 99, on the terminating element 90. The illustrated receptacle 99 has an internally threaded bore 101 for threadably seating a mating plug (not shown), and has a retaining collar 103. The collar projects radially inward to seat the receptacle on the element 90, and is secured between protruding flange 105 on the element 90 and a snap ring 107 seated in a groove 109. The remaining assembly, structure and its function, for this embodiment can be in accord with the preceding description of the termination 10.

FIGURE 11 shows a bayonet-type coupling 122 including a termination element 130, a locking nut 124, a compression spring 125, a C-clip 127, and a strain relief boot assembly 126. The termination 130 secures an unbuffered optical fiber 132 in the manner described above with reference to FIGURES 1 through 3. The spring 125 biases the locking nut 124 against the C-clip 127. Also, threaded or snap-lock couplings such as those disclosed in United States Patent No. 4,872,736, issued to Myers et al., and in HIGH PERFORMANCE PUSH-PULL COUPLING SINGLE FIBER CONNECTORS AND PLUG-IN FIBER-OPTIC CONNECTORS, Sugita et al., Review of the Electrical Communications Laboratories, Vol. 35, No. 5, pp. 529-533 (1987) both incorporated herein by reference, can be used with the termination element 130 to provide a means for coupling optical fibers.

In FIGURE 11, the forward passage section 144 of termination 130 is formed using a ferrule 135 as described in FIGURE 10. The termination 130 has an outer termination element 134 that telescopically receives an inner, actuating element 136 to press a compressive system 138 onto the fiber 132. FIGURE 11 shows the termination element 130 partially assembled; when fully assembled the elements are positioned in the manner described above with reference to FIGURE 3. The termination element 134 includes a tubular housing body 140 and the ferrule 135. The tubular housing body 140 provides a tubular passage 146 having a deflecting guide surface 148 and a forward short bore 150.

Ferrule 135 has a forward passage section 144 and outer dimension 154 which are coaxial with a central axis 156 of tubular passage 146. In addition, ferrule 135 provides radial constriction element 157. The forward portion of tubular housing body 140 includes, on the outer surfaces, a flange 152 which provides a forward seating face 153 for the spring 125. The flange 152 also includes an alignment guide flange 155 which assists to align the termination 130 in a mating coupling (not shown). The rearward portion of the tubular housing body 140 includes a locking groove 172 for receiving a C-clip 127.

The locking nut 124 of FIGURE 11 includes a forwardly extending cylindrical section 158, a rearwardly extending cylindrical section 160 and a inwardly extending flange 162. Flange 162, which has a circular aperture concentric around the axis 156, receives the termination element 130 and provides a rear seating face 164 for the spring 125. The inner and outer surfaces of the cylindrical section 158 are concentric around the axis 156 and the outer surface can be tapered, as shown. The illustrated locking nut 124 is of the bayonet type known in the art and accordingly is lanced with hook-shaped cut-outs (not shown) for engaging nubs on the surface of a mating bayonet (not shown). Alternatively, the locking nut can have a threaded inner surface to engage complementary external threads on the coupling junction.

To assemble the coupling 122 of FIGURE 11, the strain relief boot assembly 126, including heat shrink sleeve 168 and crimp sleeve 166, are slipped over a stripped optical fiber 170. Next, the termination element 130 having the spring biased locking nut 124 thereon is assembled as previously described. The jacket 174 of the optical fiber 170 is then positioned over the lands and grooves of the termination element 130. In a further step, the crimp sleeve 166 and the heat shrink sleeve 168 are moved along the buffered fiber around the rear portion of termination element 130 and over the jacket 174, crimped and shrunk into place.

Post-assembly processing of the termination 122 includes clipping and polishing the fiber. A typical post-assembly processing method is disclosed in OPTICAL CABLE TERMINATION PROCEDURES published by the assignee of the present invention and incorporated herein by reference. As described therein, the fiber is clipped by scribing the exposed projecting fiber and pulling the fiber along its axis to sever it. The forward end of the termination element, with the clipped fiber extending therefrom, typically is then inserted into a polishing disk and passed over an abrasive film, e.g., one formed of aluminium oxide, to polish the fiber facet. As also known in the art, the end of the termination element, and hence the fiber facet, can be made optically flat, or given a selective radius, by selection of the proper polishing disk.

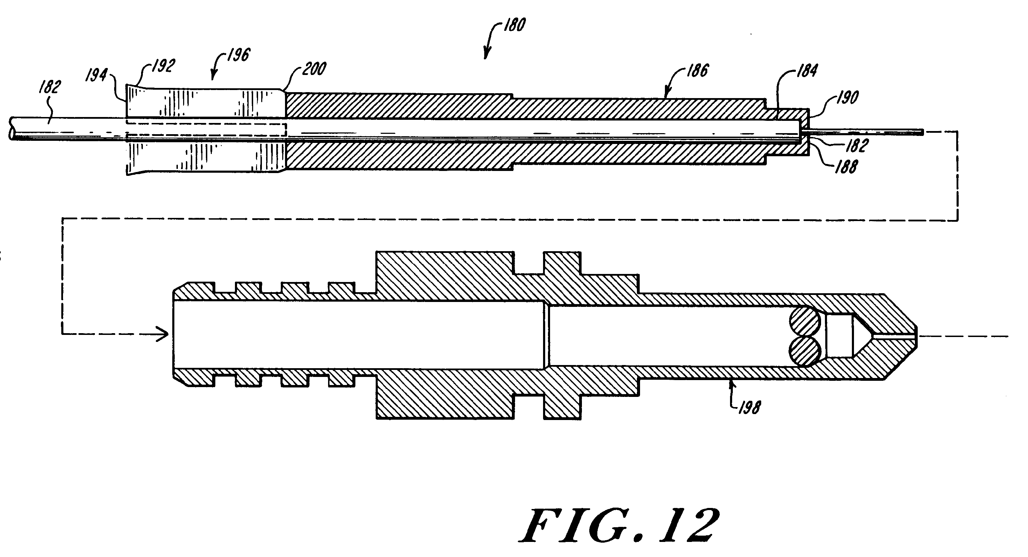

FIGURE 12 shows another termination 180 according to the invention that secures a fiber optic cable 182 in the manner described above with reference to FIGURES 1 through 8. In this embodiment, the locking grooves and locking ring are eliminated from the inner, actuating element 186 and outer, terminating element 198. The passage 184 of the inner element 186 preferrably has a cylindrical bore extending its full length except for an annular lip 188 projecting radially inward from the cylindrical bore at the exit end, i.e., at the end adjacent to the forward surface 190. This lip provides a circular abutment that the fiber cladding abuts for positioning purposes when the fiber is fully assembled within the inner element 186. Further, in this embodiment, the clamping members 194 act to secure the fiber optic cable 182. As illustrated, the clamping members 194 are formed of a rearmost section 196 on the element 186. The section 196 has an enlarged outer diameter, axially rearward of a step 200, illustrated as about three-quarters of the way from the forward surface 190 to the back, i.e., left, end of the inner element. The inner element 186 preferably includes a rearwardly located tapered flare 192 on rearmost section 196. The flare 192 increases the interference grip of the inner element 186 on the fiber optic cable 182 and with the outer element 198. In one illustrative embodiment, the radial step 200 is in the order of one or a few thousandths of an inch and the radial flare 192 is slightly larger, i.e., in the order of five thousandths of an inch.

It will thus be seen that the invention efficiently attains the objects set forth above. In particular, the invention provides a termination assembly that is readily installed without requiring heat or adhesives, and that is substantially immune to environmental conditions. This apparatus and the method of the invention hence can provide a high performance, mechanically secured termination for optical fibers, without damaging the light transmissive path.

It will be understood that changes may be made in the above constructions and in the foregoing steps and sequences of operation without departing from the scope of the invention. It is accordingly intended that all matter contained in the above description or shown in the accompanying drawings be interpreted as illustrative rather than in a limiting sense.

Having described the invention, what is claimed as new and secured by Letters Patent is:

## Claims

1. Apparatus for terminating a fiber optic cable (42) by mechanical engagement and having a terminating element (14) having an axial through passage (18) adapted for receiving an inner actuating element (12), said passage (18) having a first forward section (20) axially forward of and co-axial with a second rearward section (22), the inner actuating element having an axial passage (38) adapted for receiving the fiber optic cable (42) extending axially therethrough, said actuating element (12) being axially slideably seated within said terminating element (14), and having a compressive system (16) for engagement circumferentially about the optical fiber (60), said compressive system (16) being disposed within said passage (18) of said terminating element (14) forward of said actuating element (12), and being radially inwardly compressible into engagement with the optical fiber, when the actuating element slides in the terminating element towards said first forward section
said apparatus being characterized in that said compressive system (16) includes at least one plastics compressive element (17) of an elastically deformable resilient material seated within said terminating element passage (18), and said actuating and terminating elements cooperate together to radially inwardly deforming said compressive system (16) from a first geometric shape to a different second geometric shape.

2. Apparatus according to claim 1 further comprising radially-acting clamping means (54) for selectively radially-inwardly engaging the buffered optical fiber (42) within said rearward passage section (22), for providing a clamping of said cable in addition to the engagement by said compressive system.

3. Apparatus according to claim 1 in which said compressive system (16) comprises a single compressive element (17′, 17˝) of said elastically deformable resilient material having an aperture (68) therethrough for forming a fiber-receiving passage.

4. Apparatus according to claim 1 in which said compressive system (16) comprises a set of a plurality of substantially identical compressive elements (17, 17‴), each being of said elastically deformable resilient material and seated within said second passage section (22).

5. Apparatus according to claim 1
A. further comprising radially extending shoulder means (28) within said passage of said terminating element and located axially between said first and second passage sections for disposition in abutment with said compressive system (16), and
B. in which said actuating element (12) is selectively movable relative to said shoulder means (28) for compressing said compressive system (16) therebetween to effect said inward deformation.

6. Apparatus according to claim 1 in which
A. said actuating element (12) comprises a tubular element slideably seated within one of said passage sections (20, 22), and
B. said terminating and actuating elements cooperate for said inward deforming of said compressive system during the sliding axial assembly of said actuating element within said passage of said terminating element.

7. Apparatus according to claim 6 further comprising means (56, 58) for securing said tubular actuating element (12) in a selected location relative to said passage of said terminating element (14).

8. Apparatus according to claim 6
A. in which said tubular actuating element has an outer surface (40) with a third section (50) axially forward of and coaxial with a fourth section (52), said tubular element being arranged for telescopically fitting within said rearward passage section (22) of said terminating element (14), and
B. in which said tubular element has resilient clamping means (54) at said fourth rearward section (52) arranged for slidingly interferingly engaging said second passage section (22) for radially inwardly clamping a fiber optic cable (42) within said passage (18) at a location spaced axially rearward of said compressive system (16).

9. Apparatus according to claim 1
A. in which said actuating element (12) comprises a tubular element slideably seated within said rearward passage section (22), and
B. in which said tubular actuating element (12) includes radially acting clamping means (54) for disposition within said passage of said terminating element for selective radial inward engagement with a buffered optical fiber (42) within said rearward passage section (22) concurrent with said inward deformation of said compressive system (16).

10. Apparatus according to claim 5 in which said compressive system (16) comprises a centrally apertured element of an elastically deformable resilient material seated within said passage (18) of said terminating element with said aperture (68) thereof coaxial with the axis (25) of said passage and in abutment with said shoulder means (28), and elastically deformable radially inward in response to compression by said actuating element (12).

11. Apparatus according to claim 1 further characterized in that
A. said actuating element (12) has an axially extending tubular inner passage (38) within a tubular outer surface (40), said inner passage (38) being adapted for receiving a buffered optical fiber (42) and having an acting surface (44) at a first forward end adapted to act on said compressive system,
B. said terminating element (14) has an axially extending tubular passage (18), and constriction means (24) between the forward passage section (20) and the rearward passage section (22) adapted to act radially on said compressive system, said actuating element (12) being telescopically received in said second passage (18) and being axially slideably therein, and
C. said compressive system (16) is disposed in said second passage section (22) of said outer terminating element (14) axially forward of said acting surface (44) and encircles an optical fiber (60) received in said inner passage of said terminating element (14).

12. A method of terminating a fiber optic cable comprising the step of compressively deforming a compressive system (16), that encircles a portion of the cable, by axially telescoping an inner element (12) within an outer terminating element (14), the elements surrounding the fiber and engaging the compressive system, so as to mechanically compressively engage said portion of said cable, said compressive system (16) being radially inwardly deformed from a first shape to a different second shape.

13. A method according to claim 12
A. wherein said compressive deforming of said compressive system (16) engages said fiber optic cable (42) adjacent a forward end of the outer terminating element (14), and
B. comprising the further step of mechanically engaging a buffered portion of the cable adjacent a rear end of the outer terminating element (14) concurrent with said compressive deforming.

14. A method according to claim 12 further characterized
A. by selecting said compressive system (16) to be compressible at least in part with a linear relation between compressive force and deformation, and
B. in that said deforming step includes compressing said compressive system (16) only within said linear relation between force and deformation.

15. Apparatus according to claim 1, in which said compressive system (16) includes three elastically deformable plastic elements seated within said terminating element passage (18) radially outward from a fiber-receiving axial passage (20), said three deformable plastic elements (17, 17‴) having, in the absence of deformation, substantially identical circular cross-sections in a plane extending perpendicular to the axial extension of said passage and being arranged with said circular cross-sections symmetrically disposed about said fiber-receiving axial passage (20).

16. Apparatus according to claim 15, in which said three deformable plastic elements (17) are identically spherical in shape.

## Patentansprüche

1. Vorrichtung zum Abschließen eines faseroptischen Kabels (42) durch mechanischen Eingriff, enthaltend
ein Abschlußelement (14) mit einem axialen Durchgang (18), der zum Aufnehmen eines inneren Betätigungselementes (12) geeignet ist, wobei der Durchgang (18) einen ersten vorderen Abschnitt (20) aufweist, der axial vor einem zweiten rückwärtigen Abschnitt (22) und koaxial zu diesem ist, wobei das innere Betätigungselement einen axialen Durchgang (38) aufweist, der zum Aufnehmen des faseroptischen Kabels (42) geeignet ist, das sich axial dort hindurch erstreckt, wobei das Betätigungselement (12) axial verschiebbar innerhalb des Abschlußelementes (14) aufgenommen ist, und
ein Drucksystem (16) für einen Umfangseingriff an der optischen Faser (60) aufweist, wobei das Drucksystem (16) innerhalb des Durchgangs (18) des Abschlußelementes (14) vor dem Betätigungselement (12) angeordnet ist und radial einwärts in Eingriff mit der optischen Faser zusammendrückbar ist, wenn sich das Betätigungselement (12) in dem Abschlußelement (14) gegen den ersten vorderen Abschnitt verschiebt,
dadurch **gekennzeichnet**, daß das Drucksystem (16) zumindest ein Kunststoff-Druckelement (17) aus einem elastisch verformbaren federnden Material enthält, das innerhalb des Abschlußelement-Durchgangs (18) angeordnet ist, und wobei das Betätigungs- und das Abschlußelement zusammenarbeiten, um das Drucksystem (16) aus einer ersten geometrischen Form radial einwärts in eine unterschiedliche zweite geometrische Form zu verformen.

2. Vorrichtung nach Anspruch 1, die weiterhin eine radial wirkende Klemmeinrichtung (54) zum selektiven radialen und einwärts gerichteten Ergreifen der ummantelten optischen Faser (42) innerhalb des rückwärtigen Durchgangsabschnitts (22) aufweist, um das Kabel zusätzlich zum Eingriff durch das Drucksystem zu klemmen.

3. Vorrichtung nach Anspruch 1, bei dem das Drucksystem (16) ein einzelnes Druckelement (17′, 17˝) aus dem elastisch verformbaren federnden Material aufweist, das eine Öffnung (68) zum Bilden eines faseraufnehmenden Durchgangs enthält.

4. Vorrichtung nach Anspruch 1, bei dem das Drucksystem (16) einen Satz mit mehreren im wesentlichen identischen Druckelementen (17, 17‴) aufweist, von denen jedes aus dem elastisch verformbaren federnden Material besteht und innerhalb des zweiten Durchgangsabschnitts (22) gelagert ist.

5. Vorrichtung nach Anspruch 1,
A. die weiterhin eine sich radial erstreckende Schultereinrichtung (28) innerhalb des Durchganges des Abschlußelementes aufweist, die sich axial zwischen dem ersten und dem zweiten Durchgangsabschnitt zur Anordnung in Angrenzung an das Drucksystem (16) befindet, und
B. bei der das Betätigungselement (12) relativ zur Schultereinrichtung (28) zum Zusammendrücken des Drucksystems (16) dort dazwischen selektiv bewegbar ist, um die einwärts gerichtete Verformung zu bewirken.

6. Vorrichtung nach Anspruch 1, bei der
A. das Betätigungselement (12) ein rohrförmiges Element aufweist, das innerhalb eines der Durchgangsabschnitte (20, 22) verschiebbar gelagert ist, und
B. das Abschluß- und das Betätigungselement für die einwärts gerichtete Verformung des Drucksystems während der verschiebbaren axialen Montage des Betätigungselementes innerhalb des Durchgangs des Abschlußelementes zusammenarbeiten.

7. Vorrichtung nach Anspruch 6, die weiterhin eine Einrichtung (56, 58) zum Sichern des rohrförmigen Betätigungselementes (12) an einem ausgewählten Ort relativ zu dem Durchgang des Abschlußelementes (14) aufweist.

8. Vorrichtung nach Anspruch 6,
A. bei der das rohrförmige Betätigungselement eine äußere Oberfläche (40) mit einem dritten Abschnitt (50) aufweist, der axial vor einem vierten Abschnitt (52) und koaxial zu diesem ist, wobei das rohrförmige Element teleskopisch eingepaßt innerhalb des rückwärtigen Durchgangsabschnitts (22) des Abschlußelementes (14) angeordnet ist, und
B. bei der das rohrförmige Element eine federnde Klemmeinrichtung (54) an dem vierten rückwärtigen Abschnitt (52) aufweist, die zum verschiebbar herzustellenden Eingriff mit dem zweiten Durchgangsabschnitt (22) für radial einwärts gerichtetes Klemmen eines faseroptischen Kabels (42) innerhalb des Durchgangs (18) an einer gegenüber dem Drucksystem (16) axial nach hinten beabstandeten Stelle angeordnet ist.

9. Vorrichtung nach Anspruch 1,
A. bei der das Betätigungselement (12) ein rohrförmiges Element enthält, das innerhalb des rückwärtigen Durchgangsabschnitts (22) verschiebbar gelagert ist, und
B. bei der das rohrförmige Betätigungselement (12) eine radial wirkende Klemmeinrichtung (54) zur Anordnung innerhalb des Durchgangs des Abschlußelementes für selektiven radialen Einwärtseingriff mit einer ummantelten optischen Faser (42) innerhalb des rückwärtigen Durchgangsabschnitts (22) gleichzeitig mit der einwärts gerichteten Verformung des Drucksystems (16) enthält.

10. Vorrichtung nach Anspruch 5, bei der das Drucksystem (16) ein mit zentraler Öffnung versehenes Element aus einem elastisch verformbaren federnden Material aufweist, das innerhalb des Durchgangs (18) des Abschlußelementes gelagert ist, wobei seine Öffnung (68) koaxial zu der Achse (25) des Durchgangs und angrenzend an die Schultereinrichtung (28) angeordnet ist, und das radial einwärts elastisch verformbar ist als Reaktion auf ein Zusammendrücken durch das Betätigungselement (12).

11. Vorrichtung nach Anspruch 1, weiterhin dadurch gekennzeichnet, daß
A. das Betätigungselement (12) einen sich innerhalb einer äußeren Oberfläche (40) eines rohrförmigen Körpers axial erstreckenden Innendurchgang (38) aufweist, wobei der Innendurchgang (38) zum Aufnehmen einer ummantelten optischen Faser (42) geeignet ist und ferner das Betätigungselement mit einer Betätigungsfläche (44) an einem ersten vorderen Ende versehen ist, die zum Einwirken auf das Drucksystem geeignet ist,
B. das Abschlußelement (14) einen sich axial erstreckenden Durchgang (18) und eine Einschnürungseinrichtung (24) zwischen dem vorderen Durchgangsabschnitt (20) und dem rückwärtigen Durchgangsabschnitt (22) aufweist, die geeignet ist, radial auf das Drucksystem zu wirken, wobei das Betätigungselement (12) in dem zweiten Durchgang (18) teleskopisch aufgenommen und darin axial verschiebbar ist, und
C. das Drucksystem (16) in dem zweiten Durchgangsabschnitt (22) des äußeren Abschlußelementes (14) axial vor der Betätigungsfläche (44) angeordnet ist und eine optische Faser (60) umgibt, die in dem Innendurchgang des Abschlußelementes (14) aufgenommen ist.

12. Verfahren zum Abschließen eines faseroptischen Kabels, das den Schritt enthält, ein Drucksystem (16), das einen Abschnitt des Kabels umgibt, durch axiales Einschieben eines inneren Elementes (12) in ein äußeres Abschlußelement (14) zusammendrückend zu verformen, wobei die Elemente die Faser umgeben und mit dem Drucksystem in Eingriff sind, so daß sie den Abschnitt des Kabels mechanisch zusammendrückend ergreifen, wobei das Drucksystem (16) aus einer ersten Form radial einwärts in eine unterschiedliche zweite Form verformt wird.

13. Verfahren nach Anspruch 12,
A. bei dem das zusammendrückende Verformen des Drucksystems (16) das faseroptische Kabel (42) benachbart zu einem vorderen Ende des äußeren Abschlußelementes (14) ergreift, und
B. das den weiteren Schritt enthält, einen ummantelten Abschnitt des Kabels benachbart zu einem hinteren Ende des äußeren Abschlußelementes gleichzeitig mit der zusammendrückenden Verformung mechanisch zu ergreifen.

14. Verfahren nach Anspruch 12, weiterhin gekennzeichnet
A. durch das Auswählen des Drucksystems (16), so daß es zumindest teilweise in einem linearen Verhältnis zwischen Druckkraft und Verformung zusammendrückbar ist, und
B. daß der Verformungsschritt das Zusammendrücken des Drucksystems (16) nur innerhalb der linearen Beziehung zwischen Kraft und Verformung enthält.

15. Vorrichtung nach Anspruch 1, bei der das Drucksystem (16) drei elastisch verformbare Plastikelemente aufweist, die innerhalb des Abschlußelement-Durchganges (18) radial außerhalb von einem faseraufnehmenden axialen Durchgang (20) gelagert sind, wobei die drei verformbaren Plastikelemente (17, 17‴) bei fehlender Verformung im wesentlichen identische runde Querschnitte in einer Ebene, die sich senkrecht zu der axialen Ausdehnung des Durchgangs erstreckt, aufweisen und sie mit den runden Querschnitten symmetrisch um den faseraufnehmenden axialen Durchgang (20) angeordnet sind.

16. Vorrichtung nach Anspruch 15, bei der die drei verformbaren Plastikelemente (17) in ihrer Gestalt identisch kugelförmig sind.

## Revendications

1. Appareil de terminaison d'un câble (42) à fibre optique par engagement mécanique, ayant un élément (14) de terminaison traversé par un passage axial (18) destiné à recevoir un élément intérieur d'actionnement (12), ledit passage (18) ayant un premier tronçon avant (20) axialement en avant de et coaxial à un deuxième tronçon arrière (22), l'élément intérieur d'actionnement ayant un passage axial (38) destiné à recevoir le câble (42) à fibre optique s'étendant axialement dans ce passage, ledit élément d'actionnement (12) étant logé de façon à pouvoir coulisser axialement à l'intérieur dudit élément (14) de terminaison, et ayant un système (16) de compression destiné à réaliser une prise circonférentielle autour de la fibre optique (60), ledit système (16) de compression étant disposé à l'intérieur dudit passage (18) dudit élément (14) de terminaison en avant dudit élément (12) d'actionnement, et pouvant être comprimé radialement vers l'intérieur jusqu'en prise avec la fibre optique, lorsque l'élément d'actionnement coulisse dans l'élément de terminaison vers ledit premier tronçon avant,
ledit appareil étant caractérisé en ce que ledit système (16) de compression comprend au moins un élément (17) de compression en matière plastique formé d'une matière élastique, déformable élastiquement, logée à l'intérieur dudit passage (18) de l'élément de terminaison, et lesdits éléments d'actionnement et de terminaison coopèrent entre eux pour déformer radialement vers l'intérieur ledit système (16) de compression d'une première forme géométrique à une seconde forme géométrique différente.

2. Appareil selon la revendication 1, comportant en outre des moyens (54) de serrage agissant radialement destinés à engager sélectivement et radialement vers l'intérieur la fibre optique gainée (42) à l'intérieur dudit tronçon arrière (22) du passage, pour réaliser un serrage dudit câble en plus de la prise par ledit système de compression.

3. Appareil selon la revendication 1, dans lequel ledit système (16) de compression comporte un élément unique (17′, 17˝) de compression formé de ladite matière élastique déformable élastiquement, traversé par une ouverture (68) pour former un passage de réception de fibre.

4. Appareil selon la revendication 1, dans lequel ledit système (16) de compression comprend un jeu de plusieurs éléments sensiblement identiques (17, 17‴) de compression, chacun étant formé de ladite matière élastique déformable élastiquement et étant logé à l'intérieur dudit second tronçon (22) du passage.

5. Appareil selon la revendication 1
A. comportant en outre un moyen à épaulement (28) s'étendant radialement à l'intérieur dudit passage dudit élément de terminaison et situé axialement entre lesdits premier et second tronçons du passage pour être disposé en butée avec ledit système 16 de compression, et
B. dans lequel ledit élément d'actionnement (12) peut être déplacé sélectivement par rapport auxdits moyens à épaulement (28) afin que ledit système (16) de compression soit comprimé entre eux pour effectuer ladite déformation vers l'intérieur.

6. Appareil selon la revendication 1, dans lequel
A. ledit élément d'actionnement (12) comporte un élément tubulaire logé de façon coulissante à l'intérieur de l'un desdits tronçons (20, 22) du passage, et
B. lesdits éléments de terminaison et d'actionnement coopèrent pour ladite déformation vers l'intérieur dudit système de compression pendant l'assemblage axial coulissant dudit élément d'actionnement à l'intérieur dudit passage dudit élément de terminaison.

7. Appareil selon la revendication 6, comportant en outre des moyens (56, 58) destinés à fixer ledit élément tubulaire (12) d'actionnement dans un emplacement choisi par rapport audit passage dudit élément (14) de terminaison.

8. Appareil selon la revendication 6,
A. dans lequel ledit élément tubulaire d'actionnement présente une surface extérieure (40) avec un troisième tronçon (50) axialement en avant de et coaxial à un quatrième tronçon (52), ledit élément tubulaire étant agencé pour s'emboîter télescopiquement à l'intérieur dudit tronçon arrière (22) du passage dudit élément (14) de terminaison, et
B. dans lequel ledit élément tubulaire comporte un moyen élastique (54) de serrage audit quatrième tronçon arrière (52), agencé pour engager de façon coulissante et serrée ledit deuxième tronçon (22) du passage afin de serrer radialement vers l'intérieur un câble à fibre optique (42) à l'intérieur dudit passage (18) en un emplacement espacé axialement vers l'arrière dudit système (16) de compression.

9. Appareil selon la revendication 1,
A. dans lequel ledit élément d'actionnement (12) comprend un élément tubulaire logé de façon coulissante à l'intérieur dudit tronçon arrière (22) du passage, et
B. dans lequel ledit élément tubulaire (12) d'actionnement comprend un moyen (54) de serrage agissant radialement destiné à être disposé à l'intérieur dudit passage dudit élément de terminaison pour réaliser un engagement sélectif, radial vers l'intérieur, avec une fibre optique gainée (42) à l'intérieur dudit tronçon arrière (22) du passage simultanément à ladite déformation vers l'intérieur dudit système (16) de compression.

10. Appareil selon la revendication 5, dans lequel ledit système (16) de compression comporte un élément à ouverture centrale en matière élastique déformable élastiquement logé à l'intérieur dudit passage (18) dudit élément de terminaison, son ouverture (68) étant centrée sur l'axe (25) dudit passage et en butée avec ledit moyen à épaulement (28), et déformable élastiquement et radialement vers l'intérieur en réponse à une compression par ledit élément d'actionnement (12).

11. Appareil selon la revendication 1, caractérisé en outre en ce que
A. ledit élément d'actionnement (12) présente un passage intérieur tubulaire (38) s'étendant axialement à l'intérieur d'une surface tubulaire extérieure (40), ledit passage intérieur (38) étant destiné à recevoir une fibre optique gainée (42) et ayant une surface active (44) à une première extrémité avant destinée à agir sur ledit système de compression,
B. ledit élément (14) de terminaison présente un passage tubulaire (18) s'étendant axialement, et un moyen (24) de resserrement entre le tronçon avant (20) du passage et le tronçon arrière (22) du passage, destiné à agir radialement sur ledit système de compression, ledit élément d'actionnement (12) étant reçu télescopiquement dans ledit second passage (18) et pouvant coulisser axialement dans celui-ci, et
C. ledit système (16) de compression est disposé dans ledit second tronçon (22) du passage dudit élément extérieur (14) de terminaison axialement en avant de ladite surface active (44), et entoure une fibre optique (60) reçue dans ledit passage intérieur dudit élément (14) de terminaison.

12. Procédé de terminaison d'un câble à fibre optique, comportant l'étape qui consiste à déformer par compression un système (16) de compression, qui entoure une partie du câble, par un mouvement axial télescopique d'un élément intérieur (12) à l'intérieur d'un élément extérieur (14) de terminaison, les éléments entourant la fibre et engageant le système de compression, afin d'engager mécaniquement et par compression ladite partie dudit câble, ledit système (16) de compression étant déformé radialement vers l'intérieur d'une première forme à une seconde forme différente.

13. Procédé selon la revendication 12,
A. dans lequel ladite déformation par compression dudit système (16) de compression engage ledit câble à fibre optique (42) à proximité immédiate d'une extrémité avant de l'élément extérieur (14) de terminaison, et
B. comprenant l'étape supplémentaire qui consiste à engager mécaniquement une partie gainée du câble à proximité immédiate d'une extrémité arrière de l'élément extérieur (14) de terminaison simultanément à ladite déformation par compression.

14. Procédé selon la revendication 12, caractérisé en outre,
A. en ce que ledit système (16) de compression est choisi de façon à être compressible au moins en partie avec une relation linéaire entre la force de compression et la déformation, et
B. en ce que ladite étape de déformation consiste à comprimer ledit système (16) de compression seulement dans les limites de ladite relation linéaire entre la force et la déformation.

15. Appareil selon la revendication 1, dans lequel ledit système (16) de compression comprend trois éléments déformables élastiquement, en matière plastique, logés à l'intérieur dudit passage (18) de l'élément de terminaison, radialement vers l'extérieur d'un passage axial (20) de réception de fibre, les trois éléments déformables (17, 17‴) en matière plastique ayant, en l'absence d'une déformation, des sections transversales circulaires sensiblement identiques dans un plan s'étendant perpendiculairement au prolongement axial dudit passage et étant agencés de manière que lesdites sections transversales circulaires soient disposées symétriquement autour dudit passage axial (20) de réception de fibre.

16. Appareil selon la revendication 15, dans lequel lesdits trois éléments déformables (17) en matière plastique sont d'une forme sphérique identique.
